# EUROPÄISCHE PATENTSCHRIFT

(11) **EP 3 453 687 B1**
(45) Veröffentlichungstag und Bekanntmachung des Hinweises auf die Patenterteilung: **11.11.2020**
(21) Anmeldenummer: 18192945.6
(22) Anmeldetag: 06.09.2018
(51) Int. Cl.: C03C 17/30, C09D 4/00

(54) **UV-HÄRTENDE PRIMER-ZUSAMMENSETZUNG FÜR DAS BESCHICHTEN VON GLAS**
UV-CURING PRIMER COMPOSITION FOR COATING GLASS
COMPOSITION PRIMAIRE DURCISSANT PAR RAYONNEMENT ULTRAVIOLET POUR LE REVÊTEMENT DE VERRE

(30) Priorität: 08.09.2017 DE 102017215922
(43) Veröffentlichungstag der Anmeldung: 13.03.2019
(73) Patentinhaber: Marabu GmbH & Co. KG, 71732 Tamm (DE)
(72) Erfinder: Brückner, Christine, 71701 Schwieberdingen (DE); Jürgen, Volkmann, 73779 Deizisau (DE); Besch, Sandra, 73765 Neuhausen auf den Fildern (DE)
(74) Vertreter: Patentanwälte Ruff, Wilhelm, Beier, Dauster & Partner mbB

(56) Entgegenhaltungen:
- DE-A1- 2 255 118
- GB-A- 1 596 760
- US-A- 4 684 697

## Beschreibung

### ANWENDUNGSGEBIET UND STAND DER TECHNIK

Die Erfindung betrifft ein Verfahren zum Beschichten von Glas sowie ein Kit zur Bereitstellung einer UV-gehärteten Primer-Schicht und/oder zur Bereitstellung einer Tintenschicht auf Glas. Die Digitaldrucktechnologie, insbesondere die Tintenstrahldrucktechnologie, wird in zunehmendem Maße für industrielle Druckaufgaben eingesetzt. Gegenüber analogen Verfahren zeichnet sich die Digitaldrucktechnologie durch eine erhöhte Flexibilität aus. Weitere Vorteile bestehen im Wegfall fester Druckvorlagen sowie in der Möglichkeit, berührungslos unterschiedlich geformte Gegenstände direkt, d. h. ohne Verwendung von Etiketten oder Aufklebern, zu dekorieren.

Besonders wichtig ist die Direktdekoration von Behältern aller Art, insbesondere Glasflaschen. Zu den wesentlichen Anforderungen für eine solche Dekoration zählt eine hervorragende Resistenz der Dekoration gegenüber der Einwirkung von Wasser, beispielsweise Kondenswasser oder während Spül- oder Pasteurisierungsprozessen. Nur im Falle einer ausreichenden Wasserresistenz kann der Bedruckungsprozess in bestehende Füllanlagen integriert werden.

Konventionelle Verfahren zur Vorbehandlung von zu bedruckenden Oberflächen enthalten in der Regel einen Vorbehandlungsschritt, wie beispielsweise eine Beflammung oder eine flammenpyrolytische Abscheidung von amorphem Siliziumdioxid (sogenanntes Pyrosil®-Verfahren), welcher mit lösungsmittelbasierten Primern kombiniert wird. Das Auftragen und Trocknen des Primers ist jedoch verfahrenstechnisch aufwendig. So müssen Prozessparameter genau eingehalten werden, was sich in der industriellen Praxis häufig schwierig gestaltet. Weiterhin problematisch ist, dass die Primer oft den Einsatz von Chemikalien erforderlich machen, die insbesondere bei einer Direktdekoration von Lebensmittelverpackungen problematisch sind. Zudem werden große Mengen an Lösungsmitteln verwendet, welche durch Trocknung und unter hohem Energieaufwand wieder entfernt und anschließend sachgerecht entsorgt werden müssen. DE2255118 beschriebt eine UV-härtende Primer-Zusammensetzung für das Beschichten von Glas, insbesondere von Glas-Hohlkörpern, wobei die Primer-Zusammensetzung neben reaktiven Oligomeren und/oder reaktiven Monomeren und neben mindestens einem Photoinitiator mindestens ein Organosilan umfasst, welches 3 Acetoxy-Reste besitzt (siehe Beispiele 1-3).

Ein weiterer Nachteil besteht darin, dass konventionelle Primer nur vollflächig aufgetragen werden können, was die oben genannten Nachteile noch verschärft.

Aus der DE 22 55 118 A1 ist eine strahlungshärtbare Masse bekannt, welche mindestens einen Ester einer ethylenisch-ungesättigten Säure und eines mehrwertigen Alkohols, mindestens einen Photoinitiator und mindestens eine organische funktionelle Verbindung eines Metalls aufweist, wobei es sich bei der organischen funktionellen Verbindung um eine Silan-Verbindung mit Acetoxy-Gruppen handeln kann.

Gegenstand der US 4,684,697 ist eine durch Feuchtigkeit aushärtbare Zusammensetzung, welche neben einem nicht gelierten partiellen Hydrolyse-Produkt ein Copolymer aufweist, wobei das Copolymer durch Additionspolymerisation eines ungesättigten, siliziumfreien Monomers sowie einer ungesättigten Organosilan-Verbindung erhalten werden kann.

Die GB 1 596 760 A offenbart ein Verfahren zum Primen und Beschichten eines Glassubstrats, wobei auf das Substrat eine Silan-Verbindung appliziert wird.

### AUFGABE UND LÖSUNG

Die Erfindung stellt sich daher die Aufgabe, ein Beschichtungsverfahren unter Verwendung einer digitalverdruckbaren Primer-Zusammensetzung, welche Nachteile im Zusammenhang von konventionellen Primer vermeidet und sich insbesondere durch eine sehr gute Resistenz gegenüber Wassereinwirkung auszeichnet, sowie ein entsprechendes Kit bereitzustellen.

Diese Aufgaben werden gelöst durch ein Verfahren mit den Merkmalen des unabhängigen Anspruchs 1 sowie durch ein Kit gemäß unabhängigem Anspruch 9. Bevorzugte Ausgestaltungen der Erfindung sind in den abhängigen Ansprüchen sowie in der Beschreibung definiert. Der Wortlaut sämtlicher Ansprüche wird hiermit durch Bezugnahme ausdrücklich zum Inhalt dieser Beschreibung gemacht.

Gemäß einem ersten Aspekt betrifft die Erfindung ein Verfahren zum Beschichten von Glas, insbesondere zum Beschichten von Glas-Hohlkörpern, bei welchem
- eine Primer-Zusammensetzung auf mindestens einen Teil einer gegebenenfalls vorbehandelten Glasoberfläche schichtförmig, d. h. unter Ausbildung einer Primer-Schicht, aufgebracht wird, wobei die Primer-Zusammensetzung neben reaktiven Oligomeren und/oder reaktiven Monomeren und neben mindestens einem Photoinitiator mindestens ein Organosilan umfasst, welches mindestens einen Acetoxy-Rest, insbesondere 1 bis 4 Acetoxy-Reste, d.h. 1 Acetoxy-Rest, 2 Acetoxy-Reste, 3 Acetoxy-Reste oder 4 Acetoxy-Reste, besitzt,
- die aufgebrachte Primerschicht durch UV-Strahlung teilweise, insbesondere nur teilweise, gehärtet oder vernetzt wird, und
- auf mindestens einen Teil der teilweise gehärteten oder vernetzten Primerschicht mindestens eine weitere Beschichtung aufgebracht wird.

Bei den Glas-Hohlkörpern, welche insbesondere mittels des erfindungsgemäßen Verfahrens beschichtet werden können, kann es sich um Glas-Behälter oder Glas-Flaschen handeln.

Unter dem Ausdruck "Primer-Zusammensetzung" soll im Sinne der vorliegenden Erfindung eine Zusammensetzung verstanden werden, welche mindestens einen Primer und mithin haftvermittelnde Eigenschaften aufweist. Vorzugsweise wirkt (mindestens) das mindestens eine Organosilan der vorliegenden Erfindung als eigentlicher Primer oder Haftvermittler.

Unter dem Ausdruck "UV-härtende Primer-Zusammensetzung" soll im Sinne der vorliegenden Erfindung eine Primer-Zusammensetzung verstanden werden, welche unter Einwirkung von ultravioletter Strahlung (UV-Strahlung) teilweise oder vollständig ausgehärtet werden kann.

Unter dem Ausdruck "Primer-Tinte" soll im Sinne der vorliegenden Erfindung eine Tinte, insbesondere eine weiße, farbige oder farblose Tinte, verstanden werden, welche mindestens einen Primer und mithin haftvermittelnde Eigenschaften besitzt. Vorzugsweise wirkt (mindestens) das mindestens eine Organosilan der vorliegenden Erfindung als eigentlicher Primer oder Haftvermittler.

Unter dem Ausdruck "UV-härtende Primer-Tinte" soll im Sinne der vorliegenden Erfindung eine Primertinte verstanden werden, welche unter Einwirkung von ultravioletter Strahlung (UV-Strahlung) teilweise oder vollständig ausgehärtet werden kann.

Unter dem Ausdruck "ultraviolette Strahlung (UV-Strahlung)" soll im Sinne der vorliegenden Erfindung vorzugsweise eine Strahlung in einem Wellenlängenbereich von 100 nm bis 450 nm, insbesondere in einem Wellenlängenbereich von 100 nm bis 420 nm, verstanden werden.

Unter dem Ausdruck "reaktive Oligomere" sollen im Sinne der vorliegenden Erfindung Oligomere verstanden werden, welche unter der Einwirkung von ultravioletter Strahlung (UV-Strahlung), insbesondere in Gegenwart von Photoinitiatoren, zur Reaktion gebracht werden können und insbesondere an radikalischen Polymerisations- und/oder Vernetzungsreaktionen unter teilweiser oder vollständiger Aushärtung der erfindungsgemäßen Primer-Zusammensetzung teilnehmen können. Alternativ oder zusätzlich können die reaktiven Oligomere zur Einstellung der Viskosität, insbesondere einer für eine digitale Verdruckbarkeit geeigneten Viskosität, der erfindungsgemäßen Primer-Zusammensetzung vorgesehen sein. Bei den reaktiven Oligomeren kann es sich grundsätzlich um monofunktionelle und/oder multifunktionelle Oligomere handeln.

Der Ausdruck "Oligomere" bedeutet im Sinne der vorliegenden Erfindung Verbindungen, welche aus einer Vielzahl von Monomereinheiten, d.h. zwei oder mehr Monomereinheiten, aufgebaut sind und abhängig von der Anzahl der Monomereinheiten nicht nur niedermolekulare Verbindungen, sondern auch hochmolekulare oder polymere Verbindungen umfassen könnnen. Beispielsweise kann der Ausdruck "reaktive Oligomere" im Sinne der vorliegenden Erfindung nicht nur niedermolekulare reaktive Verbindungen, sondern auch reaktive Polymere umfassen.

Der Ausdruck "reaktive Monomere" bedeutet im Sinne der vorliegenden Erfindung Monomere, welche bei Einwirkung von ultravioletter Strahlung (UV-Strahlung), insbesondere in Gegenwart von Photoinitiatoren, zur Reaktion gebracht werden können und insbesondere an radikalischen Polymerisations- und/oder Vernetzungsreaktionen unter teilweiser oder vollständiger Aushärtung der erfindungsgemäßen Primer-Zusammensetzung teilnehmen können. Alternativ oder zusätzlich können die reaktiven Monomere zur Einstellung der Viskosität, insbesondere einer für eine digitale Verdruckbarkeit geeigneten Viskosität, der erfindungsgemäßen Primer-Zusammensetzung vorgesehen sein. Bei den reaktiven Monomeren kann es sich grundsätzlich um monofunktionelle und/oder multifunktionelle Monomere handeln.

Die Erfindung zeichnet sich insbesondere durch die nachfolgenden Vorteile aus:
- Die Primer-Zusammensetzung gemäß der vorliegenden Erfindung ist mit besonderem Vorteil digital, insbesondere mittels eines Tintenstrahldruckverfahrens, verdruckbar.
- Die UV-härtende Primer-Zusammensetzung gemäß der vorliegenden Erfindung besitzt eine sehr gute Resistenz gegenüber Wassereinwirkung, selbst bei erhöhten Temperaturen. Die erfindungsgemäße Primer-Zusammensetzung eignet sich daher in besondere Weise für die Direktdekoration (Dekoration durch Digitaldruckverfahren) von Glasoberflächen. Die Resistenz gegenüber Wasser erlaubt in vorteilhafter Weise insbesondere die Integration eines digitalen Druckprozesses in eine Glasbehälterabfüllanlage, wodurch sich die Herstellung von abgefüllten und gleichzeitig digital bedruckten Glasbehältern signifikant vereinfachen lässt.
- Das in der erfindungsgemäßen Primer-Zusammensetzung enthaltene mindestens eine Organosilan ist aufgrund seines vorzugsweise multifunktionellen, insbesondere bifunktionellen, Charakters dazu ausgebildet, sowohl die Anhaftung oder Kupplung der Primer-Zusammensetzung an eine Glasoberfläche als auch an eine nachfolgend aufgebrachte Beschichtung, vorzugsweise aus Tinte, insbesondere aus UV-härtender Tinte, zu bewirken. Die Anhaftung bzw. Kupplung an die Glasoberfläche erfolgt dabei in der Regel durch Hydrolyse des Organosilans, wobei das Organosilan aufgrund von durch die Hydrolyse freiwerdenden Silanol-Funktionen in der Lage ist, sich an die Glasoberfläche zu binden, vorzugsweise kovalent. Die Hydrolyse des Organosilans kann beispielsweise durch in der Glasoberfläche enthaltene Feuchtigkeitsspuren und/oder durch in den reaktiven Oligomeren und/oder reaktiven Monomeren enthaltene Hydroxygruppen initiiert werden.
- Ein weiterer Vorteil besteht darin, dass die erfindungsgemäße Primer-Zusammensetzung trotz der korrosiven Eigenschaften mancher Organosilane mit Acetoxy-Resten nicht korrosiv wirkt. Der Einsatz von Korrosionsinhibitoren ist daher im Allgemeinen entbehrlich.

Dementsprechend kann die UV-härtende Primer-Zusammensetzung gemäß der vorliegenden Erfindung frei von Korrosionsinhibitoren sein.
- Da die Primer-Zusammensetzung gemäß der vorliegenden Erfindung eine UV-härtende Zusammensetzung darstellt, ist auch die Verwendung von Lösungsmitteln entbehrlich. Dadurch können die im Zusammenhang der konventionellen Primer beschriebenen Nachteile, wie insbesondere eine energieaufwendige Abtrennung von Lösungsmitteln sowie deren sachgerechte Entsorgung vermieden werden.

Bei der UV-härtenden Primer-Zusammensetzung gemäß der vorliegenden Erfindung handelt es sich daher vorzugsweise um eine lösungsmittelfreie, UV-härtende Primer-Zusammensetzung.
- Aufgrund ihrer Eignung für das Bedrucken mittels Tintenstrahldruckverfahren kann die erfindungsgemäße Primer-Zusammensetzung in vorteilhafter Weise auch nur teilweise und mithin lokal beschränkt auf eine zu beschichtende Glasoberfläche aufgebracht werden.
- Ein weiterer Vorteil besteht darin, dass die Reaktivkomponenten der erfindungsgemäßen Primer-Zusammensetzung keine oder kaum Agglomerationstendenzen zeigen. Die Gefahr einer Verstopfung von Druckköpfen in Digitaldruckanlagen durch Agglomerate ist somit nicht gegeben.

In Ausgestaltung der Erfindung weist das mindestens eine Organosilan der Primer-Zusammensetzung die nachfolgende Formel I auf:

(AcO)ₙ(R)₃₋ₙSi-L-R¹ (I)

wobei
- n 1, 2 oder 3, vorzugsweise 3, ist,
- AcO der Acetoxy-Rest ist,
- R ein Alkyl-Rest, ein Alkoxy-Rest oder ein Aryloxy-Rest ist,
- Si Silizium ist,
- L ein divalenter (zweibindiger) linearer oder ein linearer (zweibindiger) verzweigter Kohlenwasserstoff-Rest ist, und
- R¹ eine reaktive organische Gruppe ist.

Das mindestens eine Organosilan gemäß der Formel I zeichnet sich mit besonderem Vorteil dadurch aus, dass durch Hydrolyse des mindestens einen Organosilans entstehende Silanol-Funktionen eine Kupplung, vorzugsweise kovalente Kupplung, an eine Glasoberfläche und die reaktive organische Gruppe R¹ eine Kupplung, vorzugsweise kovalente Kupplung, an eine nachfolgend aufgebrachte Beschichtung, insbesondere aus Tinte, erlauben. Die Kupplung an die nachfolgend aufgebrachte Beschichtung beruht vorzugsweise auf radikalischen Polymerisations- und/oder Vernetzungsreaktionen zwischen reaktiven organischen Gruppen R¹ des mindestens einen Organosilans und entsprechenden Reaktivkomponenten der Beschichtung, beispielsweise einem Acrylat-Monomer und/oder Methacrylat-Monomer und/oder Acrylat-Oligomer und/oder Methacrylat-Oligomer im Falle einer Beschichtung mit einer UV-härtenden Tinte.

In weiterer Ausgestaltung der Erfindung handelt es sich bei dem Rest R in der Formel I um einen Alkyl-Rest, welcher ausgewählt ist aus der Gruppe bestehend aus Methyl-Rest, Ethyl-Rest, n-Propyl-Rest und Isopropyl-Rest.

In weiterer Ausgestaltung der Erfindung handelt es sich bei dem Rest R in der Formel I um einen Alkoxy-Rest, welcher ausgewählt ist aus der Gruppe bestehend aus Methoxy-Rest, Ethoxy-Rest, n-Propoxy-Rest und Isopropoxy-Rest.

In weiterer Ausgestaltung der Erfindung handelt es sich bei der reaktiven organischen Gruppe R¹ in der Formel I um eine reaktive organische Gruppe, welche bei Einwirkung von ultravioletter Strahlung (UV-Strahlung), insbesondere in Gegenwart des mindestens einen Photoinitiators, zur Reaktion gebracht werden kann. Bevorzugt nimmt die reaktive organische Gruppe bei radikalischen Polymerisations- und/oder Vernetzungsreaktionen unter teilweiser oder vollständiger Aushärtung der erfindungsgemäßen Primer-Zusammensetzung und/oder einer nachfolgend aufgebrachten UV-härtenden Beschichtung, insbesondere einer UV-härtenden Tinte, teil.

In weiterer Ausgestaltung der Erfindung handelt es sich bei der reaktiven organischen Gruppe R¹ in der Formel I um einen Vinylrest (Ethenylrest), einen Allylrest, einen Acrylatrest oder einen Methacrylatrest.

In weiterer Ausgestaltung der Erfindung ist der divalente Kohlenwasserstoff-Rest L in der Formel I ein Alkylen-Rest, ein Alkenylen-Rest, ein Alkinylen-Rest oder ein Arylen-Rest, insbesondere mit 1 bis 20 Kohlenstoffatomen, bevorzugt 1 bis 8 Kohlenstoffatomen, besonders bevorzugt 1 bis 3 Kohlenstoffatomen. Vorzugsweise handelt es sich bei dem divalenten Kohlenwasserstoff-Rest L um einen Alkylen-Rest, insbesondere linearen Alkylen-Rest, bevorzugt mit 1 bis 3 Kohlenstoffatomen. Beispielsweise kann es sich bei dem divalenten Kohlenwasserstoff-Rest L um einen Methylen-Rest (-(CH₂)-), einen Ethylen-Rest (-(CH₂)₂-) oder um einen n-Propylen-Rest (-(CH₂)₃-) handeln.

In weiterer Ausgestaltung der Erfindung handelt es sich bei dem mindestens einen Organosilan gemäß Formel I um 3-Methacryloxypropyltriacetoxysilan. Dieses Organosilan hat sich als besonders vorteilhaft bei der Bereitstellung oder Herstellung einer digital verdruckbaren und insbesondere wasserresistenten UV-härtenden Primer-Zusammensetzung und/oder bei der Bereitstellung oder Herstellung einer UV-gehärteten Primer-Schicht auf einer Glasoberfläche erwiesen.

In weiterer Ausgestaltung der Erfindung handelt es sich bei dem mindestens einen Organosilan um Vinyltriacetoxysilan.

In weiterer Ausgestaltung der Erfindung weist das mindestens eine Organosilan, insbesondere gemäß Formel I, einen Anteil von 2 Gew.-% bis 50 Gew.-%, insbesondere 5 Gew.-% bis 30 Gew.-%, bevorzugt 8 Gew.-% bis 20 Gew.-%, auf, bezogen auf das Gesamtgewicht der UV-härtenden Primer-Zusammensetzung.

Weiterhin kann die UV-härtende Primer-Zusammensetzung als einziges Organosilan ein Organosilan gemäß Formel I umfassen.

In weiterer Ausgestaltung der Erfindung weist das mindestens eine Organosilan der Primer-Zusammensetzung die nachfolgende Formel II auf:

(AcO)ₙ(R)₂₋ₙR¹-L-Si-O-Si-L-R(R)₂₋ₙ(AcO)ₙ (II)

wobei
- n 1 oder 2 ist,
- AcO der Acetoxy-Rest ist,
- R ein Alkyl-Rest, ein Alkoxy-Rest oder ein Aryloxy-Rest ist,
- Si Silizium ist,
- L ein divalenter (zweibindiger) linearer oder ein divalenter (zweibindiger) verzweigter Kohlenwasserstoffrest ist, und
- R¹ eine reaktive organische Gruppe ist.

Bei dem mindestens einen Organosilan gemäß Formel II handelt es sich bevorzugt um das Dimer des Organosilans gemäß Formel I.

Das mindestens eine Organosilan gemäß Formel II kann aufgrund der reaktiven organischen Gruppen R¹ mit besonderem Vorteil an Polymerisations- und/oder Vernetzungsreaktionen unter teilweiser oder vollständiger Aushärtung der erfindungsgemäßen Primer-Zusammensetzung teilnehmen.

In weiterer Ausgestaltung der Erfindung handelt es sich bei dem Rest R in der Formel II um einen Alkyl-Rest, welcher ausgewählt ist aus der Gruppe bestehend aus Methyl-Rest, Ethyl-Rest, n-Propyl-Rest und Isopropyl-Rest.

In weiterer Ausgestaltung der Erfindung handelt es sich bei dem Rest R in der Formel II um einen Alkoxy-Rest, welcher ausgewählt ist aus der Gruppe bestehend aus Methoxy-Rest, Ethoxy-Rest, n-Propoxy-Rest und Isopropoxy-Rest.

In weiterer Ausgestaltung der Erfindung handelt es sich bei der reaktiven organischen Gruppe R¹ in der Formel II um eine reaktive organische Gruppe, welche bei Einwirkung von ultravioletter Strahlung (UV-Strahlung), insbesondere in Gegenwart des mindestens einen Photoinitiators, zur Reaktion gebracht werden kann. Bevorzugt nimmt die reaktive organische Gruppe bei radikalischen Polymerisations- und/oder Vernetzungsreaktionen unter teilweiser oder vollständiger Aushärtung der erfindungsgemäßen Primer-Zusammensetzung und/oder einer nachfolgend aufgebrachten UV-härtenden Beschichtung, insbesondere einer UV-härtenden Tinte, teil.

In weiterer Ausgestaltung der Erfindung handelt es sich bei der reaktiven organischen Gruppe R¹ in der Formel II um einen Vinylrest (Ethenylrest), einen Allylrest, einen Acrylatrest oder einen Methacrylatrest.

In weiterer Ausgestaltung der Erfindung ist der divalente Kohlenwasserstoff-Rest L in der Formel II ein Alkylen-Rest, ein Alkenylen-Rest, ein Alkinylen-Rest oder ein Arylen-Rest, insbesondere mit 1 bis 20 Kohlenstoffatomen, bevorzugt 1 bis 8 Kohlenstoffatomen, besonders bevorzugt 1 bis 3 Kohlenstoffatomen. Vorzugsweise handelt es sich bei dem divalenten Kohlenwasserstoff-Rest L um einen Alkylen-Rest, insbesondere linearen Alkylen-Rest, bevorzugt mit 1 bis 3 Kohlenstoffatomen. Beispielsweise kann es sich bei dem divalenten Kohlenwasserstoff-Rest L um einen Methylen-Rest (-(CH₂)-), einen Ethylen-Rest (-(CH₂)₂-) oder um einen n-Propylen-Rest (-(CH₂)₃-) handeln.

Besonders bevorzugt handelt es sich bei dem Organosilan gemäß Formel II um 1,3-Bis(3-methacryloxypropyl)-1,1,3,3-tetraacetoxydisiloxan oder 1,3-Bis(methacryloxypropyl)-1,1,3,3-tetraacetoxysilan.

In weiterer Ausgestaltung der Erfindung weist das mindestens eine Organosilan gemäß Formel II einen Anteil von 0,1 Gew.-% bis 50 Gew.-%, insbesondere 0,2 Gew.-% bis 30 Gew.-%, bevorzugt 0,4 Gew.-% bis 20 Gew.-%, insbesondere 0,4 Gew.-% bis 15 Gew.-%, auf, bezogen auf das Gesamtgewicht der UV-härtenden Primer-Zusammensetzung.

In weiterer Ausgestaltung der Erfindung weist die Zusammensetzung ferner mindestens ein Pigment, insbesondere ausgewählt aus der Gruppe bestehend aus Titandioxid, Ruß, Aluminium, anorganische Pigmente, organische Pigmente und Mischungen aus mindestens zwei der genannten Pigmente, auf. In dieser Ausgestaltung der Erfindung kann die Primer-Zusammensetzung auch als Primer-Tinte bezeichnet werden.

In weiterer Ausgestaltung der Erfindung handelt es sich bei dem mindestens einen Organosilan um ein Organosilan gemäß Formel I und um ein Organosilan gemäß Formel II. Mit anderen Worten kann es erfindungsgemäß bevorzugt sein, wenn es sich bei dem mindestens einen Organosilan um eine Mischung oder Kombination aus dem Organosilan gemäß Formel I und dem Organosilan gemäß Formel II handelt. Nochmals anders ausgedrückt, kann es erfindungsgemäß bevorzugt sein, wenn die UV-härtende Primer-Zusammensetzung sowohl ein Organosilan gemäß Formel I als auch ein Organosilan gemäß Formel II umfasst.

Alternativ kann die UV-härtende Primer-Zusammensetzung als einziges Organosilan ein Organosilan gemäß Formel II umfassen.

In weiterer Ausgestaltung der Erfindung weist die Primer-Zusammensetzung bei einer Temperatur von 40°C eine Viskosität zwischen 2 mPas und 50 mPas, vorzugsweise zwischen 5 mPas und 30 mPas, auf. Die in diesem Absatz offenbarten Viskositätswerte haben sich als insbesondere vorteilhaft bei einer digitalen Verdruckung der Primer-Zusammensetzung, insbesondere im Hinblick auf einen störungsfreien Betrieb eines Druckkopfes einer Digitaldruckanlage, herausgestellt.

In weiterer Ausgestaltung der Erfindung weist die Primer-Zusammensetzung eine Oberflächenspannung zwischen 15 mN/m und 50 mN/m, vorzugsweise zwischen 20 mN/m und 40 mN/m, auf. Die in diesem Absatz offenbarten Oberflächenspannungswerte haben sich als insbesondere vorteilhaft bei einer digitalen Verdruckung der Primer-Zusammensetzung, insbesondere im Hinblick auf deren Haftungsvermögen auf einer Glasoberfläche, herausgestellt.

In weiterer Ausgestaltung der Erfindung handelt es sich bei den reaktiven Oligomeren um Acrylatoligomere und/oder Methacrylatoligomere. Bei den Acrylatoligomeren kann es sich um mono- und/oder multifunktionelle Acrylatoligomere handeln. Entsprechend kann es sich bei den Methacrylatoligomeren ebenfalls um mono- und/oder multifunktionelle Methacrylatoligomere handeln. Weiterhin kann es sich bei den Acrylatoligomeren und/oder Methacrylatoligomeren um eine Mischung unterschiedlicher Acrylatoligomere und/oder Methacrylatoligomere handeln. Die Acrylatoligomere und/oder Methacrylatoligomere können insbesondere ausgewählt sein aus der Gruppe bestehend aus Epoxyacrylate, Epoxymethacrylate, Polyesteracrylate, Polyestermethacrylate, aliphatische Urethanacrylate, aromatische Urethanacrylate, aliphatische Urethanmethacrylate, aromatische Urethanmethacrylate, Polyetheracrylate, Polyethermethacrylate Silikonacrylate, Silikonmethacrylate, Melaminacrylate, Melaminmethacrylate, dentritische Acrylate, aminmodifizierte Acrylate und Mischungen aus mindestens zwei der genannten Acrylatoligomere und/oder Methacrylatoligomere. Beispielsweise können die Acrylatoligomere und/oder Methacrylatoligomere ausgewählt sein aus der Gruppe bestehend aus Methoxypolyethylenglykolmonoacrylat, Methoxypolyethylenglykolmonomethacrylat, Polyethylenglykoldiacrylat, Polyethylenglykoldimethacrylat, aminmodifizierte Polyetheracrylate und Mischungen aus mindestens zwei der genannten Acrylatoligomere und/oder Methacrylatoligomere.

In weiterer Ausgestaltung der Erfindung weist die UV-härtende Primer-Zusammensetzung einen Anteil an reaktiven Oligomeren von 0,1 Gew.-% bis 60 Gew.-%, insbesondere 0,1 Gew.-% bis 30 Gew.-%, bevorzugt 0,1 Gew.-% bis 15 Gew.-%, auf, bezogen auf das Gesamtgewicht der UV-härtenden Primer-Zusammensetzung.

In weiterer Ausgestaltung der Erfindung sind die reaktiven Monomere ausgewählt aus der Gruppe bestehend aus Acrylatmonomere, Methacrylatmonomere, Acrylamidmonomere, N-Vinylamidmonomere, Vinylacrylatmonomere und Mischungen aus wenigstens zwei der genannten Monomertypen. Bei den vorstehend aufgezählten Monomertypen kann es sich grundsätzlich um mono- oder multifunktionelle, insbesondere bifunktionelle, Monomertypen handeln. Insbesondere kann es sich bei den reaktiven Monomeren um eine Mischung unterschiedlicher Acrylatmonomere und/oder Methacrylatmonomere und/oder Acrylamidmonomere und/oder N-Vinylamidmonomere und/oder Vinylacrylatmonomere handeln.

Die Acrylatmonomere und/oder Methacrylatmonomere können insbesondere ausgewählt sein aus der Gruppe bestehend Isobornylacrylat, Isobornylmethacrylat, Octyldecylacrylat, Cyclic trimethylol-propanformalacrylat, Laurylacrylat, Laurylmethacrylate, alkoxyliertes Laurylacrylat, Isodecylacrylat, Isodecylmethacrylat, Caprolactonacrylat, 2-Phenoxyethylacrylat, 2-Phenoxyethylmethacrylat Isooctylacrylat, Isooctylmethacrylat, 2-(2-Ethoxethoxy)ethylacrylat Butylacrylat, Benzylacrylat, Benzylmethacrylat, ethoxyliertes Laurylacrylat, ethoxyliertes Phenylacrylat, alkoxyliertes Nonylphenolacrylat, alkoxyliertes Nonylphenolmethacrylat, Hydroxyethylmethacrylat, Tetrahydrofurfurylacrylat, Tetrahydrofurfurylmethacrylat, (Octahydro-4,7-methano-1H-indendiyl)bis(methylen)diacrylat Tricyclodecandimethanoldiacrylat, O-phenylphenoxyethylacrylat, Phenoxybenzylacrylat, Trimethylcyclohexylacrylat, Tridecylacrylat, Tertiobutylcyclohexylacrylat, Behenylacrylat, Caprolactonacrylat, Stearylacrylat Butandioldiacrylat, 1,2-Ethylenglykoldiacrylat, 1,2-Ethylenglykoldimethacrylat, 1,12-Dodecanoldiacrylat, 1,12-Dodecanoldimethacrylat, 1,10-Decandioldiacrylat, Esterdioldiacrylat, propoxyliertes 2-Neopentylglycoldiacrylat, Tris-(2-Hydroxyethyl)-isocyanurattriacrylat, Tris-(2-Hydroxyethyl)-isocyanurattrimethacrylat, propoxyliertes Neopentylglykoldiacrylat, Hexandioldiacrylat, Hexandioldimethacrylat Tripropylenglykoldiacrylat, Tetraethylenglycoldiacrylat, Dipropylenglykoldiacrylat, ethoxyliertes Bisphenol A-diacrylat, ethoxyliertes Bisphenol A-dimethacrylat, alkoxyliertes Hexandioldiacrylat, 3-Methyl-1,5-pentandioldiacrylat, alkoxyliertes Cyclohexandimethanoldiacrylat, Tricyclodecandimethanoldiacrylat, Trimethylolpropantriacrylat, alkoxyliertes Trimethylolpropantriacrylat, ethoxyliertes Trimethylolpropantriacrylat Trimethylolpropantrimethacrylat, Glycerolpropoxylattriacrylat, Pentaerythritoltriacrylat, Dipentaerythritolpentaacrylat, Dipentaerythritolhexaacrylat, ethoxyliertes Pentaerythritoltetraacrylat, Pentaerythritoltetraacrylat, Pentaerythritoltetramethacrylat, Ditrimethylolpropantetraacrylat, 2-N-Morpholinoethylmethacrylat, Polyethylenglycoldiacrylate und Mischungen aus mindestens zwei der genannten Acrylatmonomere und/oder Methacrylatmonomere.

Die Acrylamidmonomere und/oder N-Vinylamidmonomere und/oder Vinylacrylatmonomere können ausgewählt sein aus der Gruppe bestehend aus 4-Acryloylmorpholine, N-vinylcaprolactam, N-Vinylpyrrolidon, 2-(2-Vinyloxyethoxy)ethylacrylat, 2-(2-Vinyloxyethoxy)ethylmethacrylat und Mischungen aus wenigstens zwei der genannten Acrylamidmonomere und/oder N-Vinylamidmonomere und/oder Vinylacrylatmonomere.

In weiterer Ausgestaltung der Erfindung weist die UV-härtende Primer-Zusammensetzung einen Anteil an reaktiven Monomeren von 50 Gew.-% bis 95 Gew.-%, insbesondere 60 Gew.-% bis 90 Gew.-%, bevorzugt 70 Gew.-% bis 85 Gew.-%, auf, bezogen auf das Gesamtgewicht der UV-härtenden Primer-Zusammensetzung.

In weiterer Ausgestaltung handelt es sich bei dem mindestens einen Photoinitiator um einen Photoinitiator vom Norrish Typ I oder um einen Photoinitiator vom Norrish Typ II oder um ein Gemisch von Photoinitiatoren, insbesondere vom Norrish Typ I und/oder Norrish Typ II.

Unter dem Ausdruck "Photoinitiator vom Norrish Typ I" soll im Sinne der vorliegenden Erfindung ein Photoinitiator verstanden werden, welcher insbesondere bei Einwirkung von ultravioletter Strahlung (UV-Strahlung) in zwei Radikale zerfällt, meist durch alpha-Spaltung. Die gebildeten Radikale können dann eine Kettenpolymerisation und/oder Vernetzung unter teilweiser oder vollständiger Aushärtung der Primer-Zusammensetzung auslösen.

Unter dem Ausdruck "Photoinitiator vom Norrish Typ II" soll im Sinne der vorliegenden Erfindung ein Photoinitiator verstanden werden, welcher dazu ausgebildet ist, ein Wasserstoffatom von einem benachbarten Molekül zu abstrahieren. Dieses kann dann eine Kettenpolymerisation und/oder Vernetzung unter teilweiser oder vollständiger Aushärtung der Primer-Zusammensetzung auslösen.

Der Photoinitiator kann insbesondere ausgewählt sein aus der Gruppe bestehend aus monomere Benzophenonderivate, polymere Benzophenonderivate, Benzylketone, monomere Hydroxyketone, polymere Hydroxyketone, α-Aminoketone, Phosphinoxidderivate, Acylphosphinoxide, Metallocene, Benzoinether, Benzilketale, α-Hydroxyalkylphenone, α-Aminoalkylphenone, monomere Thioxantonderivate, polymere Thioxantonderivate, Isopropylthioxanthenone, Arylsulfoniumsalze, Aryliodoniniumsalze, Oximderivate, Imidazolderivate und Mischungen aus mindestens zwei der genannten Photoinitiatoren.

Insbesondere kann der Photoinitiator ausgewählt sein aus der Gruppe bestehend aus 2-Hydroxy-2-methyl-1-phenylpropanon, 1-Hydroxycyclohexyl-phenylketon, 2-Hydroxy-1-(4-(4-(2-hydroxy-2-methylpropionyl)benzyl)phenyl)-2-methylpropan-1-one, 1-[4-(2-Hydroxyethoxyl)-phenyl]-2-hydroxy-methylpropanon, 2-Benzyl-2-(dimethylamino)-4'-morpholinobutyrophenon, 2-Dimethylamino-2-(4-methyl-benzyl)-1-(4-morpholin-4-yl-phenyl)-butan-1-one, 2-Methyl-1-[4-(methylthio)phenyl]-2-morpholinopropan-1-one, 2,2-Dimethoxy-2-phenylacetophenon, 2,4,6-Trimethylbenzoyl-diphenylphosphinoxid, Ethyl(2,4,6-Trimethylbenzoyl)-phenylphosphinat, Bis(2,4,6-Trimethylbenzoyl)phenylphosphinoxid, Benzophenon, 4-Methylbenzophenon, 4-Phenylbenzophenon, 2,4,6-Trimethylbenzophenon, Methyl-o-benzoylbenzoat, 4-(4-methylphenylthio)benzophenon, oligomeres Alphahydroxyketon, Oligo-(2-hydroxy-2-methyl-1-(4-(1-methylvinyl)phenyl)propanon, 1-[4-(4-Benzoylphenylsulfanyl)phenyl]-2-methyl-2-(4-methylphenylsulfonyl)propan-1-on, Benzildimethylketal, 2-Isopropylthioxanthon, 2,4-Diethylthioxanton, Methylbenzoylformate, 4, 4'Bis(diethylamino)benzophenon, Titanocene, (2-Hydroxy-1-[4-(4-(2-hydroxy-2-methylpropionyl)phenoxy)phenyl]-2-methylpropan-1-on), Piparazino basierte Aminoalkylphenone, Poly(ethylenglycol)bis(p-dimethylamino)benzoat, Diester von Carboxymethoxythioxanton und Polytetramethylenglycol und Mischungen aus mindestens zwei der genannten Photoinitiatoren.

In weiterer Ausgestaltung der Erfindung weist der mindestens eine Photoinitiator einen Anteil von 2 Gew.-% bis 20 Gew.-%, insbesondere 5 Gew.-% bis 15 Gew.-%, bevorzugt 7 Gew.-% bis 15 Gew.-%, auf, bezogen auf das Gesamtgewicht der UV-härtenden Primer-Zusammensetzung.

In weiterer Ausgestaltung der Erfindung weist die UV-härtende Primer-Zusammensetzung ferner mindestens einen Synergisten, insbesondere ein tertiäres Amin, auf. Ein Synergist kommt bevorzugt in Kombination mit einem Photoinitiator vom Norrish Typ II zum Einsatz, da Ersterer in der Lage ist, besonders effektiv Startradikale zu bilden und mithin die Reaktivität zu erhöhen.

In weiterer Ausgestaltung der Erfindung weist die UV-härtbare Primer-Zusammensetzung ferner mindestens einen Zusatzstoff auf, welcher ausgewählt ist aus der Gruppe bestehend aus Stabilisator, Füllstoff, Verlaufsadditiv, Gleitmittel und Mischungen aus mindestens zwei der genannten Zusatzstoffe.

Unter dem Ausdruck "Verlaufsadditiv" soll im Sinne der vorliegenden Erfindung ein Zusatzstoff verstanden werden, welcher dazu vorgesehen ist, Unebenheiten einer durch Aufbringen der erfindungsgemäßen Primer-Zusammensetzung auf eine Glasoberfläche erzeugten Primer-Schicht auszugleichen.

Weiterhin kann die UV-härtende Primer-Zusammensetzung pigmentfrei, d.h. frei von Pigmenten, und/oder farbstofffrei, d.h. frei von Farbstoffen, sein.

In weiterer Ausgestaltung der Erfindung wird die Primer-Zusammensetzung vollständig, d.h. vollflächig, auf die Glasoberfläche schichtförmig aufgebracht.

Wie bereits erwähnt, wird die aufgebrachte Primerschicht durch UV-Strahlung teilweise, insbesondere nur teilweise, gehärtet oder vernetzt. Durch ein teilweises Härten bzw. Vernetzen der aufgebrachten Primerschicht ist gewährleistet, dass die Primerschicht bei UV-Bestrahlung noch ausreichend reaktiv ist, um gegebenenfalls eine Kupplung an die weitere Beschichtung zu ermöglichen.

In weiterer Ausgestaltung der Erfindung wird die Primer-Zusammensetzung auf die Glasoberfläche in einem Digitaldruckverfahren, insbesondere in einem Tintenstrahldruckverfahren, aufgebracht.

Unter dem Ausdruck "Digitaldruckverfahren" soll im Sinne der vorliegenden Erfindung ein Druckverfahren verstanden werden, bei welchem das Druckbild direkt von einem Computer in eine Druckmaschine übertragen wird, ohne dass eine statische oder feste Druckform benutzt wird.

Unter dem Ausdruck "Tintenstrahldruckverfahren" soll im Sinne der vorliegenden Erfindung ein Verfahren verstanden werden, bei welchem kleine Tröpfchen flüssiger Tinte erzeugt und auf ein Glassubstrat aufgebracht werden. Dabei gibt es zum einen die Möglichkeit, einen kontinuierlichen Tintenstrahl zu erzeugen (Continious Inkjet CIJ) oder zum anderen die Möglichkeit der diskontinuierlichen Erzeugung einzelner Tropfen, welche nur bei Bedarf erzeugt und auf das Substrat übertragen werden (Drop-On-Demand, DOD).

In weiterer Ausgestaltung der Erfindung werden/wird die Primer-Zusammensetzung und/oder die weitere Beschichtung unter einer wasser- oder feuchtigkeitsfreien Luftatmosphäre oder unter einer im wesentlichen wasser- oder feuchtigkeitsfreien Luftatmosphäre aufgebracht.

Unter dem Ausdruck "im wesentlichen wasser- oder feuchtigkeitsfreie Luftatmosphäre" soll im Sinne der vorliegenden Erfindung eine Luftatmosphäre, d.h. ein Luftvolumen oder Luftstrom, verstanden werden, welche, vorzugsweise bei 25°C und einem Druck von 101,325 kPa, einen Wassergehalt < 8,5 g/Nm³, insbesondere < 1 g/Nm³, bevorzugt < 0,1 g/Nm³, weiter bevorzugt < 0,01 g/Nm³, insbesondere von 0,0001 g/Nm³ bis 0,1 g/Nm³, aufweist.

Die Einheit "Nm³" bedeutet im Sinne der vorliegenden Erfindung Normkubikmeter.

Bevorzugt werden/wird die Primer-Zusammensetzung und/oder die weitere Beschichtung unter einer Luftatmosphäre, welche einen Wassergehalt von 0,1 g/Nm³ oder einen Wassergehalt < 0,1 g/Nm³ aufweist, aufgebracht. Besonders bevorzugt werden/wird die Primer-Zusammensetzung und/oder die weitere Beschichtung unter einer Luftatmosphäre, welche einen Wassergehalt von 0,003 g/Nm³ oder einen Wassergehalt < 0,003 g/Nm³ aufweist, aufgebracht.

Durch die Verwendung einer wasser- oder feuchtigkeitsfreien Luftatmosphäre bzw. einer im Wesentlichen wasser- oder feuchtigkeitsfreien Luftatmosphäre zum Aufbringen der Primer-Zusammensetzung und/oder der weiteren Beschichtung kann mit besonderem Vorteil die Haltbarkeit des aufgebrachten Primers, insbesondere nach dessen Härtung bzw. Vernetzung, verbessert werden. Ferner lässt sich hierdurch eine langfristig verbesserte Nasshaftung eines Dekors durch Vermeidung ungewollter vorzeitiger Hydrolyse des haftvermittelnden Primers erzielen. Ein weiterer Vorteil betrifft eine bessere Offenhaltung eines zum Aufbringen des Primers verwendeten Druckkopfes.

Zum Erzeugen einer wasser- oder feuchtigkeitsfreien Luftatmosphäre bzw. einer im wesentlichen wasser- oder feuchtigkeitsfreien Luftatmosphäre können insbesondere Lufttrockner, wie beispielsweise Kondensationstrockner, Membrantrockner oder Adsorptionstrockner, verwendet werden. Beispielsweise kann ein Membran-Lufttrockner der Bezeichnung MS-LDM-1 (Festo) verwendet werden. Alternativ kann ein Adsorptionstrockner der Serie PDAD (Festo) verwendet werden. Weiterhin kann zum Erzeugen einer wasser- oder feuchtigkeitsfreien Luftatmosphäre bzw. einer im wesentlichen wasser- oder feuchtigkeitsfreien Luftatmosphäre ein Trocknungsmittel, wie beispielsweise Silicagel (Kieselgel), verwendet werden. Das Trocknungsmittel kann hierzu beispielsweise in ein Trockenrohr gefüllt werden. Ein Beispiel für ein geeignetes Trocknungsmittel stellt das unter der Bezeichnung "ST-Trockenperlen" kommerziell erhältliche Silicagel (Steiner GmbH Chemie u. Labortechnik) dar. Die Verwendung eines Trocknungsmittels kann insbesondere im Falle der Verwendung geringer Luftströme und/oder Luftvolumina, beispielsweise bei Druckausgleichsöffnungen in Tintenversorgungssystemen, von Vorteil sein.

Zum Erzeugen einer wasser- oder feuchtigkeitsfreien Luftatmosphäre bzw. einer im wesentlichen wasser- oder feuchtigkeitsfreien Luftatmosphäre kann beispielsweise ein Strom getrockneter Luft an einer Düsenplatte eines Druckkopfes während eines oder mehrerer Druckvorgänge und/oder während Druckpausen an der Glasoberfläche vorbeigeführt werden.

Alternativ oder in Kombination können Luftzuführungen eines Tintenversorgungssystems (im Falle eines Tintenstrahldruckverfahrens) von der Umgebungsluft getrennt und getrocknete Luft kontrolliert diesen Stellen zugeführt werden.

Alternativ oder in Kombination kann zum Erzeugen einer wasser- oder feuchtigkeitsfreien Luftatmosphäre bzw. einer im wesentlichen wasser- oder feuchtigkeitsfreien Luftatmosphäre das Gehäuse einer Druckmaschine vollständig mit getrockneter Luft geflutet und gespült werden.

Zum Aufrechterhalten einer wasser- oder feuchtigkeitsfreien Luftatmosphäre bzw. einer im wesentlichen wasser- oder feuchtigkeitsfreien Luftatmosphäre kann es weiterhin von Vorteil sein, wenn die Raumluftfeuchte vor und/oder während des Aufbringens der Primer-Zusammensetzung und/oder der weiteren Beschichtung kontrolliert wird.

In weiterer Ausgestaltung der Erfindung wird die weitere Beschichtung vollständig, d.h. vollflächig, auf die teilweise gehärtete oder vernetzte Primer-Schicht aufgebracht.

In weiterer Ausgestaltung der Erfindung wird als weitere Beschichtung eine UV-härtende Tinte verwendet. Die UV-härtende Tinte weist vorzugsweise ein Bindemittel, ein Pigment, einen Photoinitiator sowie optional Zusatzstoffe auf. Geeignete Bindemittel stellen insbesondere reaktive Oligomere und/oder reaktive Monomere dar. Insoweit wird auf die entsprechenden bislang gemachten Ausführungen Bezug genommen. Die dort im Zusammenhang der UV-härtbaren Primer-Zusammensetzung beschriebenen reaktiven Oligomere und/oder reaktive Monomere können auch in der UV-härtenden Tinte enthalten sein. Weiterhin wird auch in Bezug auf den Photoinitiator der UV-härtenden Tinte auf die entsprechenden bislang gemachten Ausführungen Bezug genommen. Die dort im Zusammenhang der UV-härtenden Primer-Zusammensetzung beispielhaft beschriebenen Photoinitiatoren können ebenfalls in der UV-härtenden Tinte enthalten sein. Die optional vorgesehenen Zusatzstoffe können insbesondere ausgewählt sein aus der Gruppe bestehend aus Stabilisatoren, Füllstoffe, Verlaufsadditive, Gleitmittel und Mischungen aus mindestens zwei der genannten Zusatzstoffe.

In weiterer Ausgestaltung der Erfindung wird als weitere Beschichtung eine nicht UV-härtende Tinte eingesetzt. Die nicht UV-härtende Tinte weist vorzugsweise ein Bindemittel, ein Pigment, ein oder mehrere Lösemittel sowie optional Zusatzstoffe auf. Geeignete Bindemittel stellen beispielsweise Verbindungen mit funktionellen Gruppen, ausgewählt aus der Gruppe bestehend aus Epoxy-Gruppen, Amin-Gruppen, Isocyanat-Gruppen und Kombinationen aus mindestens zwei der genannten funktionellen Gruppen dar. Die optional vorgesehenen Zusatzstoffe können insbesondere ausgewählt sein aus der Gruppe bestehend aus Stabilisatoren, Füllstoffe, Verlaufsadditive, Gleitmittel und Mischungen aus mindestens zwei der genannten Zusatzstoffe. Für diese Ausgestaltung der Erfindung handelt es sich bei der reaktiven organischen Gruppe R¹ des mindestens einen Organosilans gemäß Formel I und/oder II vorzugsweise um funktionelle Gruppen, welche mit den in diesem Absatz beschriebenen Bindemitteln reagieren können.

Die weitere Beschichtung wird in einem Digitaldruckverfahren, insbesondere in einem Tintenstrahldruckverfahren, aufgebracht.

In weiterer Ausgestaltung der Erfindung wird die Glasoberfläche, vorzugsweise zur Änderung ihrer Oberflächeneigenschaften, vorbehandelt. Die Vorbehandlung erfolgt vorzugsweise durch Beflammen und/oder flammenpyrolytisches Beschichten, insbesondere Silikatisieren. Beim Beflammen wird die Glasoberfläche vorzugsweise mittels einer Brenngasflamme aufgebrochen oder aktiviert, wodurch durch den im Brenngas oder Brenngasgemisch enthaltenen Sauerstoffanteil OH- und/oder OOH-Gruppen an der aufgebrochenen bzw. aktivierten Glasoberfläche angelagert werden. Hierdurch entstehen polare Gruppen an der Glasoberfläche, wodurch die UV-härtende Primer-Zusammensetzung besser anbinden kann. Beim flammenpyrolytischen Beschichten wird einem Brenngas zum Erzeugen einer ersten Schicht eine geeignete Ausgangsverbindung, ein sogenannter Präkursor, zugesetzt. Kann durch Verbrennen der Ausgangsverbindung bzw. des Präkursors eine Silikat-Schicht, insbesondere eine amorphe Silikat-Schicht, auf der Glasoberfläche erzeugt werden, kann das flammenpyrolytische Beschichten im Sinne der vorliegenden Erfindung auch als Silikatisieren bezeichnet werden. Die Ausgangsverbindung bzw. der Präkursor verbrennt in diesem Fall in der Gasflamme zu mikroskopisch kleinen Siliziumdioxidteilchen. Diese treffen auf die Glasoberfläche, erkalten dort und bilden auf der Oberfläche eine vorzugsweise hydrophile Silikatschicht, insbesondere mit einer Schichtdicke von 5 nm bis 100 nm. Die Silikatschicht besitzt durch Unregelmäßigkeiten mit besonderem Vorteil eine sehr große Benetzungsoberfläche, wodurch die Anhaftung der UV-härtenden Primer-Zusammensetzung an der Glasoberfläche zusätzlich verbessert werden kann. Geeignete Ausgangsverbindungen bzw. Präkursor zum Silikatisieren einer Glasoberfläche stellen insbesondere Silane und/oder Siloxane dar.

In weiterer Ausgestaltung der Erfindung wird die aufgebrachte weitere Beschichtung gehärtet, vorzugsweise mittels UV-Strahlung. Bei diesem Härtungsvorgang findet vorzugsweise auch ein vollständiges Härten der Primer-Schicht statt.

In weiterer Ausgestaltung der Erfindung zeichnet sich das Verfahren durch mindestens die folgenden Verfahrensschritte auf:
- Vorbehandlung einer Glasoberfläche durch Beflammen und/oder Silikatisieren mit Flammenpyrolyse,
- Aufbringen der UV-härtenden Primer-Zusammensetzung gemäß erstem Erfindungsaspekt mit einem Tintenstrahldruckverfahren auf mindestens einen Teil der vorbehandelten Glasoberfläche,
- Teilweises Härten oder Vernetzen der Primer-Zusammensetzung mit UV-Strahlung,
- Aufbringen mindestens einer weiteren Beschichtung aus einer UV-härtenden Tinte in einem Tintenstrahldruckverfahren auf mindestens einen Teil der teilweise vernetzten Primerschicht, und
- Härten der aufgebrachten UV-Tinte mit UV-Strahlung.

In weiterer Ausgestaltung der Erfindung wird das Verfahren bei einer Temperatur von 20°C bis 50°C durchgeführt.

In weiterer Ausgestaltung der Erfindung wird die UV-Strahlung mittels einer UV-Lampe, wie beispielsweise eines Quecksilber-Strahlers, oder mittels eines LED-Strahlers erzeugt.

Gemäß einem zweiten Aspekt betrifft die Erfindung ein Kit zur Bereitstellung oder Herstellung einer UV-gehärteten Primer-Schicht auf Glas und/oder zur Bereitstellung oder Herstellung einer Tinten-Schicht, insbesondere einer UV-gehärteten Tintenschicht, auf Glas, bevorzugt zur Bereitstellung oder Herstellung einer Tintenschicht, insbesondere einer UV-gehärteten Tinten-Schicht, auf der UV-gehärteten Primer-Schicht. Bei der Tintenschicht kann es sich gegebenenfalls um eine Primer-Tintenschicht handeln.

Das Kit weist räumlich voneinander getrennt eine UV-härtbare Primer-Zusammensetzung gemäß erstem Erfindungsaspekt und mindesten einer weitere Komponente, ausgewählt aus der Gruppe bestehend aus mindestens eine Tinte, eine UV-Lampe, einen LED-Strahler, eine LED-UV-Trocknereinheit, einen Digitaldruckkopf, eine Digitaldruckanlage und Kombinationen aus mindestens zwei der genannten Komponenten, auf.

Alternativ weist das Kit räumlich voneinander getrennt eine Tinte und mindestens eine weitere Komponente, ausgewählt aus der Gruppe bestehend aus mindestens eine weitere Tinte, eine UV-Lampe, einen LED-Strahler, eine LED-UV-Trocknereinheit, einen Digitaldruckkopf, eine Digitaldruckanlage und Kombination aus mindestens zwei der genannten Komponenten auf. Die Tinte, insbesondere eine Primer-Tinte, bevorzugt eine UV-härtende Primer-Tinte, weist mindestens ein Organosilan auf, welches mindestens einen Acetoxy-Rest, insbesondere 1 Acetoxy-Rest, 2 Acetoxy-Reste, 3 Acetoxy-Reste oder 4 Acetoxy-Reste, besitzt.

Bevorzugt handelt es sich bei der Tinte um eine Dekorationstinte.

Bei der Tinte oder der mindestens einen weiteren Tinte kann es sich um eine UV-härtenden oder nicht UV-härtende Tinte, insbesondere um einen Satz von unterschiedlichen UV-härtenden Tinten und/oder unterschiedlichen nicht UV-härtenden Tinten handeln. Bevorzugt handelt es sich bei der Tinte um eine UV-härtende Tinte, insbesondere um einen Satz von unterschiedlichen UV-härtenden Tinten.

Bei der Tinte oder der mindestens einen weiteren Tinte kann es sich insbesondere um eine weiße, farbige, metallische oder farblose Tinte handeln.

Insbesondere kann die Tinte oder die mindestens eine weitere Tinte mindestens ein Pigment aufweisen, vorzugsweise ausgewählt aus der Gruppe bestehend aus Titandioxid, Ruß, Aluminium, anorganische Pigmente, organische Pigmente und Mischungen aus mindestens zwei der genannten Pigmente.

Besonders bevorzugt weist das erfindungsgemäße Kit eine Tinte, insbesondere Primer-Tinte, wie vorstehend beschrieben, und mindestens eine weitere Tinte auf, wobei die mindestens eine weitere Tinte ausgewählt ist aus der Gruppe bestehend aus weiße Tinte, farbige Tinte, metallische Tinte, farblose Tinte und Sätze aus wenigstens zwei der genannten Tinten. Wie bereits erwähnt, kann es sich bei der mindestens einen weiteren Tinte um eine UV-härtende und/oder nicht UV-härtende Tinte handeln. In den in diesem Absatz beschriebenen Formen kann das erfindungsgemäße Kit auch als Tintensatz bezeichnet werden.

Bei der UV-Lampe kann es sich beispielsweise um einen Quecksilber-Strahler handeln.

Bei dem Digitaldruckkopf handelt es sich vorzugsweise um einen Tintenstrahldruckkopf.

Bei der Digitaldruckanlage handelt es sich vorzugsweise um eine Tintenstrahldruckanlage.

Bezüglich weiterer Merkmale und Vorteile des Kits wird zur Vermeidung von Wiederholungen ebenfalls vollständig auf die bisherige Beschreibung Bezug genommen. Die dort insbesondere in Bezug auf die UV-härtende Primer-Zusammensetzung beschriebenen Merkmale und Vorteile gelten sinngemäß auch für das Kit gemäß zweitem Erfindungsaspekt.

Weitere Merkmale und Vorteile der Erfindung ergeben sich aus der nachfolgenden Beschreibung von bevorzugten Ausführungsformen in Form von Beispielen. Dabei können einzelne Merkmale der Erfindung jeweils für sich alleine oder in Kombination miteinander verwirklicht sein. Die nachfolgend beschriebenen Beispiele dienen lediglich der weiteren Erläuterung der Erfindung, ohne die Erfindung auf den Offenbarungsgehalt der Beispiele zu beschränken.

### BEISPIELTEIL

### Beispiel 1: Bedrucken von Glasoberflächen mit verschiedenen UV-härtbaren Primer-Zusammensetzungen

Glasplatten (Floatglas DinA5 3mm der Glassolutions Saint Gobain GmbH) wurden mit den in den nachfolgenden Tabellen 1-3 wiedergegebenen Primer-Zusammensetzungen bedruckt:

**Tabelle 1: Rezeptur einer erfindungsgemäßen Primer-Zusammensetzung**

| Inhaltsstoff | | Anteile (Gew.-%) |
|---|---|---|
| Monomer | Isobornylacrylat | 68,5 |
| Monomer | (Octahydro-4,7-methano-1H-indendyl)bis(methylen)diacrylat | 12,5 |
| Photoinitiator | Diphenyl(2,4,6-trimethylbenzoyl)phosphinoxid | 9,0 |
| Organosilan 1 | 3-Methacryloxypropyltriacetoxysilan | 8,5 |
| Organsilan 2 | 1,3-Bis(3-methacryloxypropyl)-1,1,3,3-tetraacetoxydisiloxan | 1,5 |

Die in obiger Tabelle 1 wiedergegebene Rezeptur für eine erfindungsgemäßen Primer-Zusammensetzung wird nachfolgend auch als "Primer 1" abgekürzt.

**Tabelle 2: Rezeptur für eine nicht erfindungsgemäße Primer-Zusammensetzung**

| Inhaltsstoff | | Anteile (Gew.-%) |
|---|---|---|
| Monomer | Isobornylacrylat | 68,5 |
| Monomer | (Octahydro-4,7-methano-1H-indendyl)bis(methylen)diacrylat | 12,5 |
| Photoinitiator | Diphenyl(2,4,6-trimethylbenzoyl)phosphinoxid | 9,0 |
| Organosilan | 3-Methacryloxypropyltrimethoxysilan | 10,0 |

Die in obiger Tabelle 2 wiedergegebene und zu Vergleichszwecken verwendete Primer-Zusammensetzung wird nachfolgend auch als "Primer 2" abgekürzt.

**Tabelle 3: Rezeptur für eine weitere nicht erfindungsgemäße Primer-Zusammensetzung**

| Inhaltsstoff | | Anteile (Gew.-%) |
|---|---|---|
| Monomer | Isobornylacrylat | 68,5 |
| Monomer | (Octahydro-4,7-methano-1H-indendyl)bis(methylen)diacrylat | 12,5 |
| Photoinitiator | Diphenyl(2,4,6-trimethylbenzoyl)phosphinoxid | 9,0 |
| Organosilan | (3-Acryloxypropyl)trimethoxysilan | 10,0 |

Die in obiger Tabelle 3 wiedergegebene und ebenfalls zu Vergleichszwecken verwendete Primer-Zusammensetzung wird nachfolgend auch aus "Primer 3" abgekürzt.

Die Glasplatten wurden mit und ohne vorherige Silikat-Vorbehandlung mit den oben tabellarisch wiedergegebenen Primer-Zusammensetzungen bedruckt. Das Bedrucken erfolgte mittels Handandruck unter Verwendung einer Spiralrakel Nr. 2. Hierzu wurden die Glasplatten zunächst mittels Handandruck mit dem Primer bedruckt. Anschließend erfolgte eine Zwischenhärtung mittels eines Quecksilber-Trockners der Firma IST (zwei Lampen mit je 120 W/cm Bandgeschwindigkeit 20 m/min). Anschließend wurde mit Weiß 7100/82464170Z oder mit Weiß 7100/79095170 (Hersteller: Fa. Marabu GmbH & Co. KG) überbedruckt. Danach erfolgte eine Nachhärtung mit dem Quecksilber-Trockner der Firma IST (zwei Lampen mit je 120 W/cm, Bandgeschwindigkeit 10 m/min).

### Haftungstests:

Die Haftung der aufgedruckten Primer-Zusammensetzung wurde mittels der Gitterschnitt-Prüfung (gemäß DIN EN ISO 2409) validiert. Der Gitterschnitt erfolgte bei den Wasserlagerungen unmittelbar auf dem noch nassen Substrat. Das Substrat wurde unmittelbar nach Trockenwischen mit einem Klebeband (Tesa 4101) beklebt. Anschließend wurde das Klebeband abgezogen. Hierbei wurden die in den nachfolgenden Tabellen 4 bis 6 wiedergegebenen Haftergebnisse erhalten:
Mit Vorhandlung der Glasoberflächen und Wasserlagerung bei Raumtemperatur:

**Tabelle 4: Erhaltene Gitterschnitt-Kennwerte nach Vorbehandlung der Glasoberflächen und/oder nach Wasserlagerung bei Raumtemperatur**

| Versuch | Primer | Uberdruck mit Weiß | Gitterschnitt vor Wasserlagerung | nach 3h Wasserlagerung | nach 24h Wasserlagerung |
|---|---|---|---|---|---|
| Versuch 1 | Primer 1 | 7100/82464170 | GT0 | GT0 | GT0 |
| Versuch 2 | Primer 1 | 7100/79095170 | GT0 | GT0 | GT0 |
| Versuch 3 | Primer 2 | 7100/82464170 | GT0 | GT5 | GT5 |
| Versuch 4 | Primer 2 | 7100/79095170 | GT0 | GT3-4 | GT3 |
| Versuch 5 | Primer 3 | 7100/82464170 | GT1-2 | GT5 | GT5 |
| Versuch 6 | Primer 3 | 7100/79095170 | GT0 | GT5 | GT3-4 |

Mit Vorbehandlung der Glasoberflächen und nach Wasserlagerung bei erhöhter Temperatur:

**Tabelle 5: Erhaltene Gitterschnitt-Kennwerte nach Vorbehandlung und/oder nach Wasserlagerung bei erhöhter Temperatur**

| Versuch | Primer | Uberdruck mit weiß | Wasserbad | Gitterschnitt |
|---|---|---|---|---|
| Versuch 7 | Primer 1 | 7100/82464170 | 0,5h 60°C | GT0 |
| Versuch 8 | Primer 1 | 7100/79095170 | 0,5h 60°C | GT0 |
| Versuch 9 | Primer 1 | 7100/82464170 | 0,5h 60°C + 1h 70°C | GT0 |
| Versuch 10 | Primer 1 | 7100/79095170 | 0,5h 60°C + 1h 70°C | GT0 |

Ohne Vorbehandlung der Glasoberfläche und Wasserlagerung bei Raumtemperatur:

**Tabelle 6: Ermittelte Gitterschnitt-Kennwerte ohne Vorbehandlung**

| Versuch | Primer | Überdruck mit Weiß | Gitterschnitt vor Wasserlagerung | Gitterschnitt nach 24h Wasserlagerung |
|---|---|---|---|---|
| Versuch 11 | Versuch 1 | 7100/82464170 | GT0 | GT0 |
| Versuch 12 | Versuch 1 | 7100/79095170 | GT0 | GT0 |

Die durchgeführten Haftungstest dokumentieren die Überlegenheit der erfindungsgemäßen Primer-Zusammensetzung ("Primer 1") bei Einwirkung von Wasser gegenüber den zu Vergleichszwecken herangezogenen Primer-Zusammensetzungen "Primer 2" und "Primer 3" und zeigen, dass auf eine Vorbehandlung möglicherweise verzichtet werden kann.

### Beispiel 2: Bedrucken einer Glasoberfläche mittels einer weiteren erfindungsgemäßen UV-härtbaren Primer-Zusammensetzung

Glasplatten (Floatglas DinA5 3mm der Firma Glassolution Saint Gobain GmbH) sowie Formflaschen (Braunglas HKL III, Hersteller: Stölzle-Oberglas GmbH) wurden mit der nachfolgenden Rezeptur einer UV-härtbaren Primer-Zusammensetzung bedruckt:

**Tabelle 7: Rezeptur für eine weitere erfindungsgemäße Primer-Zusammensetzung**

| Inhaltsstoff | | Anteil (Gew.-%) |
|---|---|---|
| Monomer | Isobornylacrylat | 68,5 |
| Monomer | (Octahydro-4,7-methano-1H-indendiyl)bis(methylen)diacrylat | 12,5 |
| Photoinitiator | Diphenyl(2,4,6-trimethylbenzoyl)phosphinoxid | 9,0 |
| Organosilan 1 | 3-Methacryloxypropyl-triacetoxysilan | 7,0 |
| Organosilan 2 | 1,3-Bis(3-methacryloxypropyl)-1,1,3,3-tetraacetoxydisiloxan | 2,0 |
| Additiv | Stabilisator | 1,0 |

Die obige Primer-Zusammensetzung wies bei 40°C eine Viskosität von 10,0 mPas sowie eine Oberflächenspannung von 31,2 mN/m auf.

Die oben genannten Glasplatten sowie die Formflaschen wurden wie folgt bedruckt:
Zunächst wurden die Glasplatten sowie Formflaschen beflammt und/oder silikatisiert. Die so behandelten Glasoberflächen wurden anschließend mittels der oben in Tabelle 7 angegebenen Primer-Zusammensetzung bedruckt. Das Bedrucken erfolgte mittels einer Tintenstrahldruckanlage (Typ XY300 der Firma Industrial Inkjet Ltd.). Als Druckköpfe wurden solche vom Typ KM1024iM des Herstellers Konica-Minolta Business Solutions Deutschland GmbH verwendet. Das Bedrucken erfolgte mittels der Single-Pass-Technologie und in einer Auflösung von 360x360 dpi. Die Druckgeschwindigkeit betrug 200 mm/s.

Nach Aufbringen der Primer-Zusammensetzung wurde (mit einer Verzögerung von 12 s) eine Zwischenhärtung, d. h. ein teilweises Vernetzen, mittels eines LED-Strahlers (Pinning-Lampe LED 395 nm 8 W der Dr. Hönle AG) durchgeführt. Anschließend wurde mit Weiß 7100/82464170Z (Hersteller: Fa. Marabu GmbH & Co. KG) überbedruckt und ohne Verzögerung mit dem oben genannten LED-Strahler zwischengehärtet. Die Nachhärtung erfolgte mittels einer Quecksilberlampe vom Typ VZERO2 085 (Hersteller: Integration Technology Ltd.) ohne Verzögerung.

Die eingesetzte Primer-Zusammensetzung ließ sich problemlos in der Tintenstrahldruckanlage verarbeiten, insbesondere ohne dass Verstopfungen in den Druckköpfen und/oder korrosive Schädigungen auftraten.

### Haftungstests:

Die Haftung der aufgedruckten Primer-Zusammensetzung wurde mittels der Gitterschnitt-Prüfung (gemäß DIN EN ISO 2409) validiert. Der Gitterschnitt erfolgte bei den Wasserlagerungen unmittelbar auf dem noch nassen Substrat. Das Substrat wurde unmittelbar nach Trockenwischen mit einem Klebeband (Tesa 4101) beklebt. Anschließend wurde das Klebeband abgezogen. Die hierbei ermittelten Gitterschnitt-Kennwerte (GT) sind in nachfolgender Tabelle 8 wiedergegeben:

**Tabelle 8: Ermittelte Gitterschnitt-Kennwerte**

| Gitterschnitt | Glasplatte | Flasche |
|---|---|---|
| Trocken | GT1 | GT1-2 |
| Nach 1h Wasserbad bei Raumtemperatur | GT1 | GT1-2 |
| Nach 24h Wasserbad bei Raumtemperatur | GT1 | GT 1-2 |

Die durchgeführten Tests bestätigen die hervorragende Verdruckbarkeit und die hervorragende Haftfestigkeit der Primer-Zusammensetzung auf Glasoberflächen. Die durchgeführten Haftungstests zeigten weiterhin, dass die Haftfestigkeit der aufgebrachten Primer-Zusammensetzung selbst nach mehrstündiger Wasserlagerung nicht oder zumindest nicht nennenswert beeinträchtigt wurde. Die validierte Primer-Zusammensetzung zeichnete sich somit durch eine hervorragende Resistenz gegenüber Wasser aus.

### 3. Untersuchung des Einflusses der Luftfeuchtigkeit auf die Offenhaltung eines Druckkopfes:

In einem Teststand für Tintenstrahldruckköpfe (XY300 von Industrial Inkjet, UK) wurde ein Druckkopf von Konica Minolta (Typ KM1024MHE-D) über eine Spritze mit Schlauch mit einem Primer gefüllt und einmal pro Woche angedruckt und dabei auf ausgefallene Düsen überprüft. Der Druckkopf wurde während der Versuchsdauer nicht verkappt, so dass eine Düsenplatte stets Kontakt mit der Umgebungsluft hatte.

### Versuch 1:

Die Luftfeuchte betrug 40 % (rel.). Die Raumtemperatur betrug 25 °C. Nach 6 Wochen Versuchsdauer traten die ersten ausgefallenen Düsen auf. Die ausgefallenen Düsen konnten durch Reinigung nicht wieder regeneriert werden.

### Versuch 2:

Die Luftfeuchte in der Umgebung des Druckkopfes wurde durch Zuführung getrockneter Luft auf 0,5 % (rel.) abgesenkt. Auch nach 6 Monaten war keine Veränderung am Druckkopf feststellbar.

Die obige Primer-Zusammensetzung wies bei 40°C eine Viskosität von 10,0 mPas sowie eine Oberflächenspannung von 31,2 mN/m auf.

Die oben genannten Glasplatten sowie die Formflaschen wurden wie folgt bedruckt:
Zunächst wurden die Glasplatten sowie Formflaschen beflammt und/oder silikatisiert. Die so behandelten Glasoberflächen wurden anschließend mittels der oben in Tabelle 7 angegebenen Primer-Zusammensetzung bedruckt. Das Bedrucken erfolgte mittels einer Tintenstrahldruckanlage (Typ XY300 der Firma Industrial Inkjet Ltd.). Als Druckköpfe wurden solche vom Typ KM1024iM des Herstellers Konica-Minolta Business Solutions Deutschland GmbH verwendet. Das Bedrucken erfolgte mittels der Single-Pass-Technologie und in einer Auflösung von 360x360 dpi. Die Druckgeschwindigkeit betrug 200 mm/s.

Nach Aufbringen der Primer-Zusammensetzung wurde (mit einer Verzögerung von 12 s) eine Zwischenhärtung, d. h. ein teilweises Vernetzen, mittels eines LED-Strahlers (Pinning-Lampe LED 395 nm 8 W der Dr. Hönle AG) durchgeführt. Anschließend wurde mit Weiß 7100/82464170Z (Hersteller: Fa. Marabu GmbH & Co. KG) überbedruckt und ohne Verzögerung mit dem oben genannten LED-Strahler zwischengehärtet. Die Nachhärtung erfolgte mittels einer Quecksilberlampe vom Typ VZERO2 085 (Hersteller: Integration Technology Ltd.) ohne Verzögerung.

Die eingesetzte Primer-Zusammensetzung ließ sich problemlos in der Tintenstrahldruckanlage verarbeiten, insbesondere ohne dass Verstopfungen in den Druckköpfen und/oder korrosive Schädigungen auftraten.

### Haftungstests:

Die Haftung der aufgedruckten Primer-Zusammensetzung wurde mittels der Gitterschnitt-Prüfung (gemäß DIN EN ISO 2409) validiert. Der Gitterschnitt erfolgte bei den Wasserlagerungen unmittelbar auf dem noch nassen Substrat. Das Substrat wurde unmittelbar nach Trockenwischen mit einem Klebeband (Tesa 4101) beklebt. Anschließend wurde das Klebeband abgezogen. Die hierbei ermittelten Gitterschnitt-Kennwerte (GT) sind in nachfolgender Tabelle 8 wiedergegeben:

**Tabelle 8: Ermittelte Gitterschnitt-Kennwerte**

| Gitterschnitt | Glasplatte | Flasche |
|---|---|---|
| Trocken | GT1 | GT1-2 |
| Nach 1h Wasserbad bei Raumtemperatur | GT1 | GT1-2 |
| Nach 24h Wasserbad bei Raumtemperatur | GT1 | GT 1-2 |

Die durchgeführten Tests bestätigen die hervorragende Verdruckbarkeit und die hervorragende Haftfestigkeit der Primer-Zusammensetzung auf Glasoberflächen. Die durchgeführten Haftungstests zeigten weiterhin, dass die Haftfestigkeit der aufgebrachten Primer-Zusammensetzung selbst nach mehrstündiger Wasserlagerung nicht oder zumindest nicht nennenswert beeinträchtigt wurde. Die validierte Primer-Zusammensetzung zeichnete sich somit durch eine hervorragende Resistenz gegenüber Wasser aus.

### 3. Untersuchung des Einflusses der Luftfeuchtigkeit auf die Offenhaltung eines Druckkopfes:

In einem Teststand für Tintenstrahldruckköpfe (XY300 von Industrial Inkjet, UK) wurde ein Druckkopf von Konica Minolta (Typ KM1024MHE-D) über eine Spritze mit Schlauch mit einem Primer gefüllt und einmal pro Woche angedruckt und dabei auf ausgefallene Düsen überprüft. Der Druckkopf wurde während der Versuchsdauer nicht verkappt, so dass eine Düsenplatte stets Kontakt mit der Umgebungsluft hatte.

### Versuch 1:

Die Luftfeuchte betrug 40 % (rel.). Die Raumtemperatur betrug 25 °C. Nach 6 Wochen Versuchsdauer traten die ersten ausgefallenen Düsen auf. Die ausgefallenen Düsen konnten durch Reinigung nicht wieder regeneriert werden.

### Versuch 2:

Die Luftfeuchte in der Umgebung des Druckkopfes wurde durch Zuführung getrockneter Luft auf 0,5 % (rel.) abgesenkt. Auch nach 6 Monaten war keine Veränderung am Druckkopf feststellbar.

## Patentansprüche

1. Verfahren zum Beschichten von Glas, insbesondere zum Beschichten von Glas-Hohlkörpern, **dadurch gekennzeichnet, dass**
- eine UV-härtende Primer-Zusammensetzung für das Beschichten von Glas, insbesondere von Glas-Hohlkörpern, wobei die Primer-Zusammensetzung neben reaktiven Oligomeren und/oder reaktiven Monomeren und neben mindestens einem Photoinitiator mindestens ein Organosilan umfasst, welches mindestens einen Acetoxy-Rest, insbesondere 1 bis 4 Acetoxy-Reste, besitzt, auf mindestens einen Teil einer ggf. vorbehandelten Glasoberfläche aufgebracht wird,
- die aufgebrachte Primer-Schicht durch UV-Strahlung teilweise vernetzt wird, und
- auf mindestens einen Teil der vernetzten Primer-Schicht mindestens eine weitere Beschichtung aufgebracht wird, wobei die Primer-Zusammensetzung auf die Glasoberfläche vorzugsweise in einem Digitaldruckverfahren, insbesondere einem Tintenstrahldruckverfahren, aufgebracht wird, **dadurch gekennzeichnet, dass** die weitere Beschichtung, vorzugsweise eine UV-härtende Tinte, in einem Digitaldruckverfahren, insbesondere einem Tintenstrahldruckverfahren, aufgebracht wird.

2. Verfahren nach Anspruch 1, **dadurch gekennzeichnet, dass** die Primer-Zusammensetzung und/oder die weitere Beschichtung unter einer Luftatmosphäre mit einem Wassergehalt < 8,5 g/Nm³, insbesondere < 1 g/Nm³, bevorzugt < 0,1 g/Nm³, weiter bevorzugt < 0,01 g/Nm³, aufgebracht werden/wird.

3. Verfahren nach Anspruch 1 oder 2, **gekennzeichnet durch** mindestens die folgenden Verfahrensschritte:
- Vorbehandlung einer Glasoberfläche durch Beflammen und/oder Silikatisieren mit Flammenpyrolyse,
- Aufbringen der UV-härtenden Primer-Zusammensetzung mit einem Tintenstrahldruckverfahren auf mindestens einen Teil der vorbehandelten Glasoberfläche,
- Teilweises Vernetzen der Primer-Zusammensetzung mit UV-Strahlung,
- Aufbringen mindestens einer weiteren Beschichtung aus einer UV-härtenden Tinte in einem Tintenstrahldruckverfahren auf mindestens einen Teil der vernetzten Primerschicht, und
Härten der aufgebrachten UV-Tinte mit UV-Strahlung.

4. Verfahren nach einem der vorhergehenden Ansprüche, **dadurch gekennzeichnet, dass** die Primer-Zusammensetzung mindestens ein Organosilan der folgenden Formel I umfasst:
(AcO)ₙ(R)₃₋ₙSi-L-R¹ (I)
wobei
- n 1-3, vorzugsweise 3 ist,
- AcO der Acetoxy-Rest ist,
- R ein Alkyl-Rest, insbesondere ein Methyl-Rest, ein Ethyl-Rest, ein n-Propyl-Rest oder ein Isopropyl-Rest, ein Alkoxy-Rest, insbesondere ein Methoxy-Rest, ein Ethoxy-Rest oder ein Isoproproxy-Rest, oder ein Aryloxy-Rest ist,
- Si Silizium ist,
- L ein divalenter linearer oder ein divalenter verzweigter Kohlenwasserstoff-Rest ist, und
- R¹ eine reaktive organische Gruppe ist.

5. Verfahren nach einem der vorhergehenden Ansprüche, **dadurch gekennzeichnet, dass** die Primer-Zusammensetzung mindestens ein Organosilan der folgenden Formel II umfasst:
(AcO)ₙ(R)₂₋ₙR¹-L-Si-O-Si-L-R¹(R)₂₋ₙ(AcO)ₙ (II)
wobei
- n 1 oder 2 ist,
- AcO der Acetoxy-Rest ist,
- R ein Alkyl-Rest, insbesondere ein Methyl-Rest, ein Ethyl-Rest, ein n-Propyl-Rest oder ein Isopropyl-Rest, ein Alkoxy-Rest, insbesondere ein Methoxy-Rest, Ethoxy-Rest oder Isoproproxy-Rest, oder ein Aryloxy-Rest ist,
- Si Silizium ist,
- L ein divalenter linearer oder ein divalenter verzweigter Kohlenwasserstoff-Rest ist, und
- R¹ eine reaktive organische Gruppe ist.

6. Verfahren nach Anspruch 4 oder 5, **dadurch gekennzeichnet, dass** es sich bei der reaktiven organischen Gruppe R¹ um eine organische Gruppe handelt, welche bei Einwirkung von ultravioletter Strahlung, insbesondere in Gegenwart des mindestens einen Photoinitiators, zur Reaktion gebracht werden kann, wobei die reaktive organische Gruppe vorzugsweise ein Vinylrest, ein Allylrest, ein Acrylatrest oder ein Methacrylatrest umfasst.

7. Verfahren nach einem der vorhergehenden Ansprüche, **dadurch gekennzeichnet, dass** es sich bei dem Organosilan um 3-Methacryloxypropyltriacetoxysilan oder 1,3-Bis(3-methacryloxypropyl)-1,1,3,3-tetraacetoxydisiloxan handelt.

8. Verfahren nach einem der vorhergehenden Ansprüche, **dadurch gekennzeichnet, dass** die Primer-Zusammensetzung ferner mindestens ein Pigment, insbesondere ausgewählt aus der Gruppe bestehend aus Titandioxid, Ruß, Aluminium, anorganische Pigmente, organische Pigmente und Mischungen aus wenigstens zwei der genannten Pigmente, umfasst.

9. Kit zur Bereitstellung einer UV-gehärteten Primer-Schicht auf Glas und/oder zur Bereitstellung einer Tinten-Schicht, insbesondere UV-gehärtete Tinten-Schicht, auf Glas, **dadurch gekennzeichnet, dass** das Kit eine UV-härtende Primer-Zusammensetzung für das Beschichten von Glas, insbesondere von Glas-Hohlkörpern, wobei die Primer-Zusammensetzung neben reaktiven Oligomeren und/oder reaktiven Monomeren und neben mindestens einem Photoinitiator mindestens ein Organosilan umfasst, welches mindestens einen Acetoxy-Rest, insbesondere 1 bis 4 Acetoxy-Reste, besitzt, oder eine Tinte, aufweisend mindestens ein Organosilan, welches mindestens einen Acetoxy-Rest, insbesondere 1 bis 4 Acetoxy-Reste, besitzt und mindestens eine weitere Komponente, ausgewählt aus der Gruppe bestehend aus mindestens eine (weitere) Tinte, eine UV-Lampe, einen LED-Strahler, eine LED-UV-Trocknereinheit, einen Digitaldruckkopf eine Digitaldruckanlage und Kombinationen aus mindestens zwei der genannten Komponenten, aufweist.

10. Kit nach Anspruch 9, **dadurch gekennzeichnet, dass** die Primer-Zusammensetzung mindestens ein Organosilan der folgenden Formel I umfasst:
(AcO)ₙ(R)₃₋ₙSi-L-R¹ (I)
wobei
- n 1-3, vorzugsweise 3 ist,
- AcO der Acetoxy-Rest ist,
- R ein Alkyl-Rest, insbesondere ein Methyl-Rest, ein Ethyl-Rest, ein n-Propyl-Rest oder ein Isopropyl-Rest, ein Alkoxy-Rest, insbesondere ein Methoxy-Rest, ein Ethoxy-Rest oder ein Isoproproxy-Rest, oder ein Aryloxy-Rest ist,
- Si Silizium ist,
- L ein divalenter linearer oder ein divalenter verzweigter Kohlenwasserstoff-Rest ist, und
- R¹ eine reaktive organische Gruppe ist.

11. Kit nach Anspruch 9 oder 10, **dadurch gekennzeichnet, dass** die Primer-Zusammensetzung mindestens ein Organosilan der folgenden Formel II umfasst:
(AcO)ₙ(R)₂₋ₙR¹-L-Si-O-Si-L-R¹(R)₂₋ₙ(AcO)ₙ (II)
wobei
- n 1 oder 2 ist,
- AcO der Acetoxy-Rest ist,
- R ein Alkyl-Rest, insbesondere ein Methyl-Rest, ein Ethyl-Rest, ein n-Propyl-Rest oder ein Isopropyl-Rest, ein Alkoxy-Rest, insbesondere ein Methoxy-Rest, Ethoxy-Rest oder Isoproproxy-Rest, oder ein Aryloxy-Rest ist,
- Si Silizium ist,
- L ein divalenter linearer oder ein divalenter verzweigter Kohlenwasserstoff-Rest ist, und
- R¹ eine reaktive organische Gruppe ist.

12. Kit nach Anspruch 10 oder 11, **dadurch gekennzeichnet, dass** es sich bei der reaktiven organischen Gruppe R¹ um eine organische Gruppe handelt, welche bei Einwirkung von ultravioletter Strahlung, insbesondere in Gegenwart des mindestens einen Photoinitiators, zur Reaktion gebracht werden kann, wobei die reaktive organische Gruppe vorzugsweise ein Vinylrest, ein Allylrest, ein Acrylatrest oder ein Methacrylatrest umfasst.

13. Kit nach einem der Ansprüche 9 bis 12, **dadurch gekennzeichnet, dass** es sich bei dem Organosilan um 3-Methacryloxypropyltriacetoxysilan handelt.

14. Kit nach einem der Ansprüche 9 bis 13, **dadurch gekennzeichnet, dass** es sich bei dem Organosilan um 1,3-Bis(3-methacryloxypropyl)-1,1,3,3-tetraacetoxydisiloxan handelt.

15. Kit nach einem der Ansprüche 9 bis 14, **dadurch gekennzeichnet, dass** die Primer-Zusammensetzung ferner mindestens ein Pigment, insbesondere ausgewählt aus der Gruppe bestehend aus Titandioxid, Ruß, Aluminium, anorganische Pigmente, organische Pigmente und Mischungen aus wenigstens zwei der genannten Pigmente, umfasst.

## Claims

1. Method for coating glass, in particular for coating glass hollow bodies, **characterized in that**
- a UV-curing primer composition for the coating of glass, in particular glass hollow bodies, wherein the primer composition, in addition to reactive oligomers and/or reactive monomers and in addition to at least one photoinitiator, comprises at least one organosilane, which possesses at least one acetoxy radical, in particular 1 to 4 acetoxy radicals, is applied to at least part of an optionally pre-treated glass surface,
- the applied primer layer is partially crosslinked by UV radiation, and
- at least one further coating is applied to at least part of the crosslinked primer layer, wherein the primer composition is applied to the glass surface preferably in a digital printing process, in particular an inkjet printing process,
**characterized in that**
the further coating, preferably a UV-curing ink, is applied in a digital printing process, in particular an inkjet printing process.

2. Method according to claim 1, **characterized in that** the primer composition and/or the further coating are/is applied in an air atmosphere having a water content < 8.5 g/Nm³, in particular < 1 g/Nm³, preferably < 0.1 g/Nm³, more preferably < 0.01 g/Nm³.

3. Method according to claim 1 or 2, **characterized by** at least the following method steps:
- pre-treatment of a glass surface by flame treatment and/or silicate treatment by means of flame pyrolysis,
- application of the UV-curing primer composition using an inkjet printing process to at least part of the pre-treated glass surface,
- partial crosslinking of the primer composition with UV radiation,
- application of at least one further coating of a UV-curing ink in an inkjet printing process to at least part of the crosslinked primer layer, and
- curing of the applied UV ink with UV radiation.

4. Method according to any of the preceding claims, **characterized in that** the primer composition comprises at least one organosilane of Formula I below:
(AcO)ₙ(R)₃₋ₙSi-L-R¹ (I)
where
- n is 1-3, preferably 3,
- AcO is the acetoxy radical,
- R is an alkyl radical, in particular a methyl radical, an ethyl radical, an n-propyl radical or an isopropyl radical, an alkoxy radical, in particular a methoxy radical, an ethoxy radical or an isopropoxy radical, or an aryloxy radical,
- Si is silicon,
- L is a divalent linear or a divalent branched hydrocarbon radical, and
R¹ is a reactive organic group.

5. Method according to any of the preceding claims, **characterized in that** the primer composition comprises at least one organosilane of Formula II below:
(AcO)ₙ(R)₂₋ₙR¹-L-Si-O-Si-L-R¹(R)₂₋ₙ(AcO)ₙ (II)
where
- n is 1 or 2,
- AcO is the acetoxy radical,
- R is an alkyl radical, in particular a methyl radical, an ethyl radical, an n-propyl radical or an isopropyl radical, an alkoxy radical, in particular a methoxy radical, ethoxy radical or isopropoxy radical, or an aryloxy radical,
- Si is silicon,
- L is a divalent linear or a divalent branched hydrocarbon radical, and
- R¹ is a reactive organic group.

6. Method according to claim 4 or 5, **characterized in that** the reactive organic group R¹ is an organic group, which under the action of ultraviolet radiation, in particular in the presence of the at least one photoinitiator, can be caused to react, wherein the reactive organic group preferably comprises a vinyl radical, an allyl radical, an acrylate radical or a methacrylate radical.

7. Method according to any of the preceding claims, **characterized in that** the organosilane is 3-methacryloxypropyltriacetoxysilane or is 1,3-bis(3-methacryloxypropyl)-1,1,3,3-tetraacetoxydisiloxane.

8. Method according to any of the preceding claims, **characterized in that** the primer composition further comprises at least one pigment, in particular selected from the group composed of titanium dioxide, carbon black, aluminium, inorganic pigments, organic pigments and mixtures of at least two of the aforementioned pigments.

9. Kit for providing a UV-cured primer layer on glass and/or for providing an ink layer, in particular a UV-cured ink layer, on glass, **characterized in that** the kit comprises a UV-curing primer composition for the coating of glass, in particular glass hollow bodies, wherein the primer composition, in addition to reactive oligomers and/or reactive monomers and in addition to at least one photoinitiator, comprises at least one organosilane, which possesses at least one acetoxy radical, in particular 1 to 4 acetoxy radicals, or an ink, including at least one organosilane, which possesses at least one acetoxy radical, in particular 1 to 4 acetoxy radicals, and at least one further component, selected from the group consisting of at least one (further) ink, a UV lamp, an LED emitter, an LED-UV drier unit, a digital printing head, a digital printing system and combinations of at least two of the aforementioned components.

10. Kit according to claim 9, **characterized in that** the primer composition comprises at least one organosilane of Formula I below:
(ACO)ₙ(R)₃₋ₙSi-L-R¹ (I)
where
- n is 1-3, preferably 3,
- AcO is the acetoxy radical,
- R is an alkyl radical, in particular a methyl radical, an ethyl radical, an n-propyl radical or an isopropyl radical, an alkoxy radical, in particular a methoxy radical, an ethoxy radical or an isopropoxy radical, or an aryloxy radical,
- Si is silicon,
- L is a divalent linear or a divalent branched hydrocarbon radical, and
- R¹ is a reactive organic group.

11. Kit according to claim 9 or 10, **characterized in that** the primer composition comprises at least one organosilane of Formula II below:
(AcO)ₙ(R)₂₋ₙR¹-L-Si-O-Si-L-R¹(R)₂₋ₙ(AcO)ₙ (II)
where
- n is 1 or 2,
- AcO is the acetoxy radical,
- R is an alkyl radical, in particular a methyl radical, an ethyl radical, an n-propyl radical or an isopropyl radical, an alkoxy radical, in particular a methoxy radical, ethoxy radical or isopropoxy radical, or an aryloxy radical,
- Si is silicon,
- L is a divalent linear or a divalent branched hydrocarbon radical, and
- R¹ is a reactive organic group.

12. Kit according to claim 10 or 11, **characterized in that** the reactive organic group R¹ is an organic group, which under the action of ultraviolet radiation, in particular in the presence of the at least one photoinitiator, can be caused to react, wherein the reactive organic group preferably comprises a vinyl radical, an allyl radical, an acrylate radical or a methacrylate radical.

13. Kit according to any of claims 9 to 12, **characterized in that** the organosilane is 3-methacryloxypropyltriacetoxysilane.

14. Kit according to any of claims 9 to 13, **characterized in that** the organosilane is 1,3-bis(3-methacryloxypropyl)-1,1,3,3-tetraacetoxydisiloxane.

15. Kit according to any of claims 9 to 14, **characterized in that** the primer composition further comprises at least one pigment, in particular selected from the group composed of titanium dioxide, carbon black, aluminium, inorganic pigments, organic pigments and mixtures of at least two of the aforementioned pigments.

## Revendications

1. Procédé de revêtement de verre, notamment de revêtement de corps creux en verre, **caractérisé en ce que**
- une composition d'amorce à durcissement par UV pour le revêtement de verre, notamment de corps creux en verre, la composition d'amorce comprenant, en plus d'oligomères réactifs et/ou de monomères réactifs et en plus d'au moins un photoinitiateur, au moins un organosilane, qui comporte au moins un radical acétoxy, notamment 1 à 4 radicaux acétoxy, est appliquée sur au moins une partie d'une surface en verre éventuellement prétraitée,
- la couche d'amorce appliquée est partiellement réticulée par rayonnement UV, et
- au moins un revêtement supplémentaire est appliqué sur au moins une partie de la couche d'amorce réticulée, la composition d'amorce étant appliquée sur la surface en verre de préférence dans un procédé d'impression numérique, notamment un procédé d'impression à jet d'encre, **caractérisé en ce que** le revêtement supplémentaire, de préférence une encre à durcissement par UV, est appliqué dans un procédé d'impression numérique, notamment un procédé d'impression à jet d'encre.

2. Procédé selon la revendication 1, **caractérisé en ce que** la composition d'amorce et/ou le revêtement supplémentaire sont appliqués sous une atmosphère d'air ayant une teneur en eau < 8,5 g/Nm³, notamment < 1 g/Nm³, de préférence < 0,1 g/Nm³, de manière davantage préférée < 0,01 g/Nm³.

3. Procédé selon la revendication 1 ou 2, **caractérisé par** au moins les étapes de procédé suivantes :
- le prétraitement d'une surface en verre par flammage et/ou silicatisation avec une pyrolyse à la flamme,
- l'application de la composition d'amorce à durcissement par UV avec un procédé d'impression à jet d'encre sur au moins une partie de la surface en verre prétraitée,
- la réticulation partielle de la composition d'amorce avec un rayonnement UV,
- l'application d'au moins un revêtement supplémentaire en une encre à durcissement par UV dans un procédé d'impression à jet d'encre sur au moins une partie de la couche d'amorce réticulée, et
- le durcissement de l'encre UV appliquée avec un rayonnement UV.

4. Procédé selon l'une quelconque des revendications précédentes, **caractérisé en ce que** la composition d'amorce comprend au moins un organosilane de la formule générale I :
(AcO)ₙ(R)₃₋ₙSi-L-R¹ (I)
dans laquelle
- n vaut 1 à 3, de préférence 3,
- AcO est le radical acétoxy,
- R est un radical alkyle, notamment un radical méthyle, un radical éthyle, un radical n-propyle ou un radical isopropyle, un radical alcoxy, notamment un radical méthoxy, un radical éthoxy ou un radical isopropoxy, ou un radical aryloxy,
- Si est le silicium,
- L est un radical hydrocarboné linéaire divalent ou ramifié divalent, et
- R¹ est un groupe organique réactif.

5. Procédé selon l'une quelconque des revendications précédentes, **caractérisé en ce que** la composition d'amorce comprend au moins un organosilane de la formule II suivante :
(AcO)n(R)₂₋ₙR¹-L-Si-O-Si-L-R¹(R)₂₋ₙ(AcO)ₙ (II)
dans laquelle
- n vaut 1 ou 2,
- AcO est le radical acétoxy,
- R est un radical alkyle, notamment un radical méthyle, un radical éthyle, un radical n-propyle ou un radical isopropyle, un radical alcoxy, notamment un radical méthoxy, un radical éthoxy ou un radical isopropoxy, ou un radical aryloxy,
- Si est le silicium,
- L est un radical hydrocarboné linéaire divalent ou ramifié divalent, et
- R¹ est un groupe organique réactif.

6. Procédé selon la revendication 4 ou 5, **caractérisé en ce que** le groupe organique réactif R¹ consiste en un groupe organique, qui peut être mis en réaction lors de l'action d'un rayonnement ultraviolet, notamment en présence dudit au moins un photoinitiateur, le groupe organique réactif comprenant de préférence un radical vinyle, un radical allyle, un radical acrylate ou un radical méthacrylate.

7. Procédé selon l'une quelconque des revendications précédentes, **caractérisé en ce que** l'organosilane consiste en le 3-méthacryloxypropyltriacétoxysilane ou le 1,3-bis(3-méthacryloxypropyl)-1,1,3,3-tétraacétoxydisiloxane.

8. Procédé selon l'une quelconque des revendications précédentes, **caractérisé en ce que** la composition d'amorce comprend en outre au moins un pigment, notamment choisi dans le groupe constitué par le dioxyde de titane, le noir de carbone, l'aluminium, les pigments inorganiques, les pigments organiques et les mélanges d'au moins deux des pigments mentionnés.

9. Kit pour la préparation d'une couche d'amorce durcie par UV sur du verre et/ou pour la préparation d'une couche d'encre, notamment d'une couche d'encre durcie par UV, sur du verre, **caractérisé en ce que** le kit comprend une composition d'amorce à durcissement par UV pour le revêtement de verre, notamment de corps creux en verre, la composition d'amorce comprenant, en plus d'oligomères réactifs et/ou de monomères réactifs et en plus d'au moins un photoinitiateur, au moins un organosilane, qui comporte au moins un radical acétoxy, notamment 1 à 4 radicaux acétoxy, ou une encre, comprenant au moins un organosilane, qui comporte au moins un radical acétoxy, notamment 1 à 4 radicaux acétoxy, et au moins un composant supplémentaire, choisi dans le groupe constitué par au moins une encre (supplémentaire), une lampe UV, un émetteur LED, une unité de séchage LED-UV, une tête d'impression numérique, une unité d'impression numérique et des combinaisons d'au moins deux des composants mentionnés.

10. Kit selon la revendication 9, **caractérisé en ce que** la composition d'amorce comprend au moins un organosilane de la formule I suivante :
(AcO)ₙ(R)₃₋ₙSi-L-R¹ (I)
dans laquelle
- n vaut 1 à 3, de préférence 3,
- AcO est le radical acétoxy,
- R est un radical alkyle, notamment un radical méthyle, un radical éthyle, un radical n-propyle ou un radical isopropyle, un radical alcoxy, notamment un radical méthoxy, un radical éthoxy ou un radical isopropoxy, ou un radical aryloxy,
- Si est le silicium,
- L est un radical hydrocarboné linéaire divalent ou ramifié divalent, et
- R¹ est un groupe organique réactif.

11. Kit selon la revendication 9 ou 10, **caractérisé en ce que** la composition d'amorce comprend au moins un organosilane de la formule II suivante :
(AcO)ₙ(R)₂₋ₙR¹-L-Si-O-Si-L-R¹(R)₂₋ₙ(AcO)ₙ (II)
dans laquelle
- n vaut 1 ou 2,
- AcO est le radical acétoxy,
- R est un radical alkyle, notamment un radical méthyle, un radical éthyle, un radical n-propyle ou un radical isopropyle, un radical alcoxy, notamment un radical méthoxy, un radical éthoxy ou un radical isopropoxy, ou un radical aryloxy,
- Si est le silicium,
- L est un radical hydrocarboné linéaire divalent ou ramifié divalent, et
- R¹ est un groupe organique réactif.

12. Kit selon la revendication 10 ou 11, **caractérisé en ce que** le groupe organique réactif R¹ consiste en un groupe organique, qui peut être mis en réaction lors de l'action d'un rayonnement ultraviolet, notamment en présence dudit au moins un photoinitiateur, le groupe organique réactif comprenant de préférence un radical vinyle, un radical allyle, un radical acrylate ou un radical méthacrylate.

13. Kit selon l'une quelconque des revendications 9 à 12, **caractérisé en ce que** l'organosilane consiste en le 3-méthacryloxypropyltriacétoxysilane.

14. Kit selon l'une quelconque des revendications 9 à 13, **caractérisé en ce que** l'organosilane consiste en le 1,3-bis(3-méthacryloxypropyl)-1,1,3,3-tétraacétoxydisiloxane.

15. Kit selon l'une quelconque des revendications 9 à 14, **caractérisé en ce que** la composition d'amorce comprend en outre au moins un pigment, notamment choisi dans le groupe constitué par le dioxyde de titane, le noir de carbone, l'aluminium, les pigments inorganiques, les pigments organiques et les mélanges d'au moins deux des pigments mentionnés.
